# EUROPEAN PATENT SPECIFICATION

(11) **EP 0 882 390 B1**
(45) Date of publication and mention of the grant of the patent: **23.10.2002**
(21) Application number: 98201571.1
(22) Date of filing: 12.05.1998
(51) Int. Cl.: A01G 9/08

(54) **Dosing device for potting soil**
Dosiervorrichtung für Blumenerde
Dispositif à doser du terreau

(30) Priority: 04.06.1997 NL 1006218
(43) Date of publication of application: 09.12.1998
(73) Proprietor: van Kempen, Antonius Gerardus, 6644KE Ewijk (NL)
(72) Inventor: van Kempen, Antonius Gerardus, 6644KE Ewijk (NL)
(74) Representative: Dokter, Hendrik Daniel

(56) References cited:
- FR-A- 2 488 100
- GB-A- 2 241 934
- NL-A- 9 100 077

## Description

The invention relates to a dosing device for dosed discharge of a bulk material mass, for instance potting soil, from a storage container which comprises at least two parallel opposite walls and wherein an infeed opening and outfeed opening are respectively provided between the corresponding outer ends of these walls for receiving this mass between these walls and the infeed and outfeed openings.

Such a dosing device is known wherein the container is formed by the walls and a movable bottom bounded by the walls and comprising a conveyor belt. The container is disposed for instance such that the conveyor belt ends above a second conveyor belt for further transport of the bulk material mass or, when the dosing device is used for potting soil, above a per se known potting machine in which pots are filled with potting soil, into which is then placed a plant for cultivation.

Each time soil is dosed from the known dosing device the whole soil supply in the storage container is necessarily displaced in the direction from the infeed opening to the outfeed opening, as a result of which the conveyor belt and the drive thereof must have a heavy construction respectively a high capacity, which in turn results in high initial and operating costs. Another drawback of the known dosing device is that the dosing accuracy is low, because the quantity of soil dispensed at the end of the conveyor belt is determined both by the displacement of the conveyor belt and the height of the supply on the conveyor belt, and this height, determined by the manner of filling of the storage container, is quite random.

Furthermore a closing device according to the preamble of claim 1 is known from GB-A-2 241 934.

The object of the invention is to provide a dosing device which is simple to construct and to use and of which the purchase and operating costs are relatively low and with which a determined quantity of a bulk material mass for dosing can be discharged in reliable manner, wherein the dosing accuracy is not dependent on the height of the supply of this mass.

These objectives are achieved, and other advantages obtained, with a dosing device of the type stated in the preamble, which is characterized according to the invention by a carriage, on which carriage at least one gripper arm is suspended pivotally at one end round a pivot shaft extending transversely of the walls, which gripper arm is provided at the other end with a gripper element, wherein the gripper element is displaceable controllably or freely as desired in vertical direction, and the carriage is displaceable over a distance and the gripper arm has a length such that the gripper element is displaceable over the entire length of the space bounded by the walls.

In an embodiment the at least one gripper arm has a fixed length which is greater at any position of the carriage than the distance from the pivot shaft to the bottom surface between the walls.

In another embodiment the at least one gripper arm is telescopic, wherein the maximum length of the gripper arm is at least equal to the maximum distance from the pivot shaft to the bottom surface between the walls.

Filling of a dosing device according to the invention with a bulk material mass takes place in simple manner in a situation wherein the gripper arm is held in its highest position. The dosed discharge of the bulk material mass takes place by successively performing the steps of
(1) displacing the carriage to the infeed opening of the storage container, wherein the gripper arm is held in its highest position,
(2) lowering the gripper arm in controlled manner until the gripper element rests freely on the bottom surface or the bulk material mass present thereon,
(3) displacing the carriage to the outfeed opening of the storage container, wherein the gripper element is freely displaceable in vertical direction and in this situation pushes ahead of itself a quantity of bulk material mass from the top of the supply, which quantity, in the case of sufficient supply, is determined practically solely by the form and dimensions of the gripper element,
(4) raising the gripper element as soon as it has reached the outfeed opening and the pushed forward quantity of bulk material mass has been pressed out of the outfeed opening by the gripper element, and
(5) repeatedly performing step (1).

In a practical embodiment the carriage is displaceable using drive means over parallel guides extending horizontally along the walls.

In this embodiment an electric motor is for instance placed on the carriage for displacing the carriage and lowering or raising the gripper element as required.

In a simple embodiment of a device according to the invention the carriage is displaceable under the influence of the force of gravity in the direction from the outfeed opening to the infeed opening over parallel guides inclining upward along the walls in the direction from the infeed to the outfeed opening, and drive means are provided for displacing the carriage in the direction from the infeed to the outfeed opening.

In this embodiment the drive means for the carriage are formed for instance by a first winch placed at the highest point of the guides and the carriage comprises a second winch for lowering or raising the gripper element as required.

In a very advantageous embodiment of a dosing device according to the invention the bottom surface between the walls has on at least a part thereof bounded by the outfeed opening an upward sloping incline in the direction from the infeed opening to the outfeed opening.

In a further embodiment the incline can be adjusted using adjusting means such that the bottom surface at the location of the outfeed opening ends for instance just above a potting machine or a conveyor belt, so that the soil pushed along by the gripper element is deposited in this potting machine respectively onto this conveyor belt.

The gripper element in a device according to the invention comprises for instance a slide which is placed at a determined angle relative to the at least one gripper arm, which angle is preferably adjustable using adjusting means.

In order to prevent the usually moist potting soil compacting or caking onto the bottom surface, the slide in yet another embodiment comprises a row of tooth-shaped protrusions directed toward the bottom surface.

The invention will now be elucidated hereinbelow on the basis of an embodiment with reference to the annexed drawings.

In the drawings
Fig. 1 shows schematically in broken-away perspective view an embodiment of a potting soil dosing device according to the invention in a first situation,
Fig. 2 shows the dosing device of fig. 1 in a second situation which follows the first situation,
Fig. 3 shows the dosing device of fig. 1 in a third situation following on from the second situation, and
Fig. 4 shows the dosing device of fig. 1 in a fourth situation following on from the third situation.

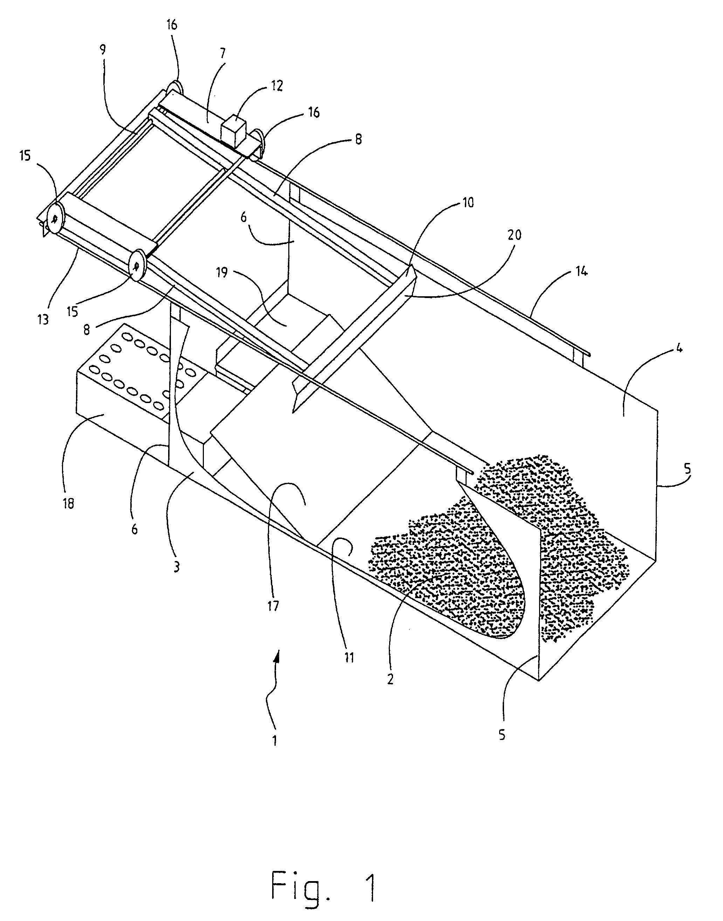

Figure 1 is a highly simplified view of a dosing device 1 for dosed discharging of potting soil 2 from a storage container substantially consisting of two parallel opposite walls 3, 4 and wherein between the corresponding ends 5, 6 of these walls 3, 4 an infeed opening and outfeed opening are respectively formed for infeed and outfeed of potting soil 2. Displaceable along the upper side of said walls 3, 4 is a carriage 7 on one end of which two gripper arms 8 are suspended round a pivot shaft 9, which gripper arms 8 are provided on the other end with a gripper element 10, wherein at any position of carriage 7 the fixed length of gripper arms 8 is greater than the distance from pivot shaft 9 to bottom surface 11 between the walls 3, 4. An electric motor 12 is placed on carriage 7 for displacing of carriage 7 provided with wheels 15, 16 over a pair of parallel horizontal guides 13, 14 and for lowering or raising gripper element 10 as required, which element is displaceable over the entire length of the space bounded by walls 3, 4. A part 17 of bottom surface 11 bounded by the outfeed opening has an incline sloping upward in the direction from the infeed to the outfeed opening and adjustable by means of adjusting means (not shown) and ending above the infeed side of a potting machine 18 and above a conveyor belt 19, which likewise ends above the infeed side of said potting machine 18. A slide 20 is placed on gripper element 10 at a determined angle relative to gripper arms 8, which angle can be varied subject to the desired dose and the substance of the potting soil mass. The figure shows a situation in which carriage 8 is fully retracted to the outfeed side and gripper 8, 10, 20 lies in its highest position, while a quantity of potting soil 2 lies on bottom surface 11 close to the infeed opening.

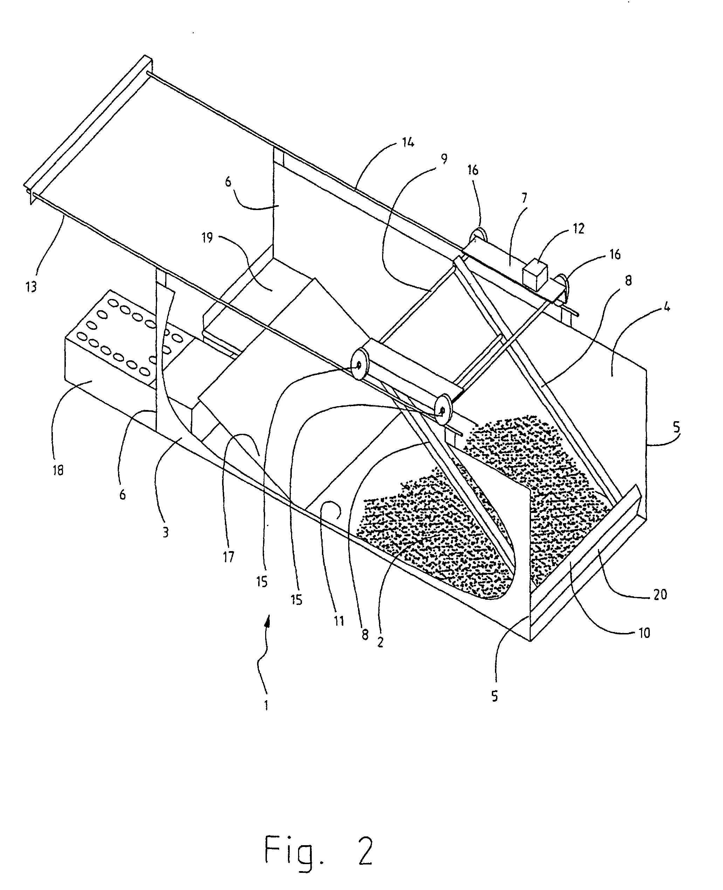

Fig. 2 shows dosing device 1 of fig. 1 in a following situation, wherein carriage 7 has been moved wholly to the infeed opening and gripper element 10 rests freely on and behind the potting soil mass 2 such that slide 20 can push a determined dose ahead of itself.

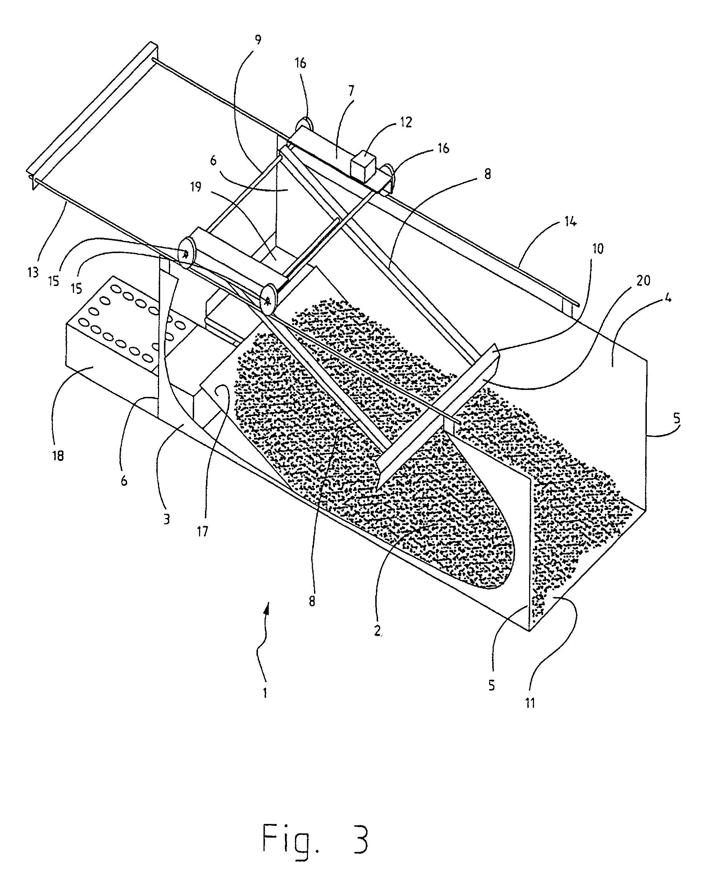

Fig. 3 shows dosing device 1 of fig. 1 in a further advanced position, wherein carriage 7 has been moved halfway towards the outfeed opening from the infeed opening and has pulled gripper element 10 along behind it, wherein slide 20 has pushed along a determined dose ahead of itself.

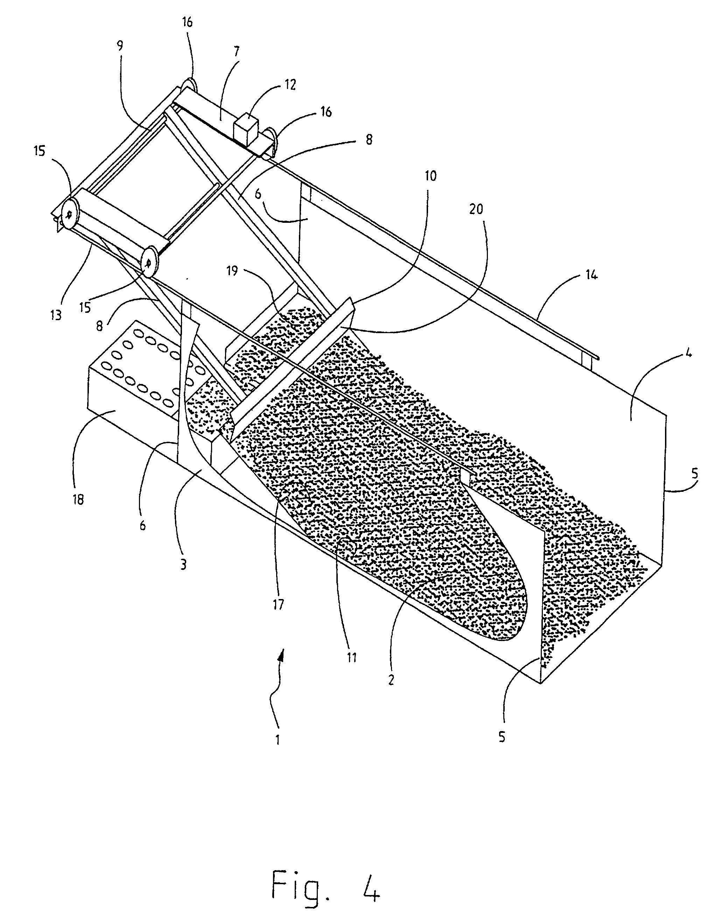

Fig. 4 shows dosing device 1 of fig. 1 in even further advanced position, wherein carriage 7 has been moved wholly to the outfeed opening and gripper element 10, which rests freely on the end of the inclining bottom part, has deposited the dose of potting soil pushed along by slide 20 over the edge of inclining bottom part 17 onto the infeed side of the potting machine 18 and onto conveyor belt 19.

It is emphasized that the above described embodiment serves to elucidate the invention and not to limit it.

Within the scope of the inventive concept it is possible for instance to incorporate the dosing device as a modular system in a transport container or in a trailer provided with wheels, so that the device can be used at any desired location.

The bottom surface between the opposite walls is preferably formed by a flat concrete plate provided with an inclining part rising toward the outfeed opening, but can also be provided with a part sloping downward toward the outfeed opening, or can be formed by the ground surface on which the walls are disposed.

The opposite walls are preferably so far apart that a truck can be driven into the infeed opening therebetween.

The inner walls of a shed, the walls of a container or truck or per se known sheet pile elements can be used as walls, wherein the guides for the carriage can be arranged on, above or along the mutually facing inner sides of the walls.

Flat rails or round bar material can be used as guides for the carriage, or one or both guides can be made in the form of a gear rack, wherein the corresponding wheels are embodied as toothed wheels. It is further possible to suspend the carriage from a monorail system, so that only one guide can suffice.

In a simple device the control of the carriage and of the gripper can be manual, wherein for instance the drives are provided by winches, while in devices wherein the carriage is provided with an electric motor the control can be fully automated.

## Claims

1. Dosing device (1) for dosed discharge of a bulk material mass (2), for instance potting soil, from a storage container which comprises at least two parallel opposite walls (3, 4) and wherein an infeed opening and outfeed opening are respectively provided between the corresponding outer ends (5, 6) of these walls for receiving this mass (2) between these walls and the infeed and outfeed openings, wherein a carriage (7) is displaceable along the upper side of said walls (3, 4), **characterized in that** on the carriage at least one gripper arm (8) is suspended pivotally at one end round a pivot shaft (9) extending transversely of the walls (3, 4), which gripper arm (8) is provided at the other end with a gripper element (10), wherein the gripper element (10) is displaceable controllably or freely as desired in vertical direction, and the carriage (7) is displaceable over a distance and the gripper arm (8) has a length such that the gripper element (10) is displaceable over the entire length of the space bounded by the walls (3, 4).

2. Device (1) as claimed in claim 1, **characterized in that** the at least one gripper arm (8) has a fixed length which is greater at any position of the carriage (7) than the distance from the pivot shaft (9) to the bottom surface (11) between the walls (3, 4).

3. Device as claimed in claim 1, **characterized in that** the at least one gripper arm is telescopic, wherein the maximum length of the gripper arm is at least equal to the maximum distance from the pivot shaft to the bottom surface between the walls.

4. Device as claimed in any of the claims 1-3, **characterized in that** the carriage (7) is displaceable using drive means (12) over parallel guides (13, 14) extending horizontally along the walls (3, 4).

5. Device (1) as claimed in claim 4, **characterized in that** an electric motor (12) is placed on the carriage (7) for displacing the carriage (7) and lowering or raising the gripper element (10) as required.

6. Device as claimed in claim 1 or 2, **characterized in that** the carriage is displaceable under the influence of the force of gravity in the direction from the outfeed opening to the infeed opening over parallel guides inclining upward along the walls in the direction from the infeed to the outfeed opening, and drive means are provided for displacing the carriage in the direction from the infeed to the outfeed opening.

7. Device as claimed in claim 6, **characterized in that** the drive means for the carriage are formed by a first winch placed at the highest point of the guides and the carriage comprises a second winch for lowering or raising the gripper element as required.

8. Device (1) as claimed in any of the foregoing claims, **characterized in that** the bottom surface between the walls has on at least a part (17) thereof bounded by the outfeed opening an upward sloping incline in the direction from the infeed opening to the outfeed opening.

9. Device (1) as claimed in claim 8, **characterized in that** the incline is adjustable using adjusting means.

10. Device (1) as claimed in any of the foregoing claims, **characterized in that** the gripper element (10) comprises a slide (20) which is placed at a determined angle relative to the at least one gripper arm (8).

11. Device (1) as claimed in claim 10, **characterized in that** the determined angle is adjustable using adjusting means.

12. Device (1) as claimed in claim 10 or 11, **characterized in that** the slide comprises a row of tooth-shaped protrusions directed toward the bottom surface.

## Patentansprüche

1. Dosiervorrichtung (1) für das dosierte Entladen einer Schüttgutmasse (2), zum Beispiel Topfblumenerde, aus einem Vorratsbehälter, die zumindest zwei parallele gegenüberliegende Wände (3, 4) umfasst und die zwischen den entsprechenden äußeren Enden (5, 6) dieser Wände mit einer Einlassöffnung beziehungsweise einer Auslassöffnung zur Aufnahme dieser Masse (2) zwischen diesen Wänden und der Einlass- und Auslassöffnung versehen ist, und in der sich ein Wagen (7) entlang der oberen Seite der besagten Wände (3, 4) verschieben lässt, **dadurch gekennzeichnet, dass** an dem Wagen zumindest ein Greiferarm (8) an einem Ende drehbar um eine sich quer zu den Wänden (3, 4) ausstreckende Drehachse (9) aufgehängt ist und dieser Greiferarm (8) an dem anderen Ende mit einem Greiferelement (10) versehen ist, wobei das Greiferelement (10) in senkrechter Richtung wahlweise kontrollierbar oder frei verschiebbar ist, und der Wagen (7) über einen Abstand verschiebbar ist und der Greiferarm (8) eine solche Länge hat, dass das Greiferelement (10) über die volle Länge des von den Wände (3, 4) begrenzten Raumes verschiebbar ist.

2. Vorrichtung (1) nach Anspruch 1, **dadurch gekennzeichnet, dass** der zumindest eine Greiferarm (8) eine feste Länge hat, die bei jeder Stellung des Wagens (7) größer als der Abstand von der Drehachse (9) zur Bodenfläche (11) zwischen den Wänden (3, 4) ist.

3. Vorrichtung nach Anspruch 1, **dadurch gekennzeichnet, dass** der zumindest eine Greiferarm teleskopisch ist, wobei die maximale Länge des Greiferarms zumindest gleich dem maximalen Abstand von der Drehachse zur Bodenfläche zwischen den Wänden ist.

4. Vorrichtung nach einem der Ansprüche 1-3, **dadurch gekennzeichnet, dass** der Wagen (7) mit Hilfe von Antriebsmitteln (12) über sich entlang den Wänden (3, 4) waagerecht ausstreckende, parallele Führungen (13, 14) verschiebbar ist.

5. Vorrichtung (1) nach Anspruch 4, **dadurch gekennzeichnet, dass** auf dem Wagen (7) ein Elektromotor (12) zum Verschieben des Wagens (7) und zum nach Bedarf Senken oder Heben des Greiferelements (10) angebracht ist.

6. Vorrichtung nach Anspruch 1 oder 2, **dadurch gekennzeichnet, dass** der Wagen unter Einwirkung der Schwerkraft über entlang den Wänden in der Richtung von der Einlass- zur Auslassöffnung schräg ansteigende, parallele Führungen in der Richtung von der Auslassöffnung zur Einlassöffnung verschiebbar ist, und Antriebsmittel zum Verschieben des Wagens in der Richtung von der Einlassöffnung zur Auslassöffnung zur Verfügung gestellt sind.

7. Vorrichtung nach Anspruch 6, **dadurch gekennzeichnet, dass** die Antriebsmittel für den Wagen aus einer an dem höchsten Punkt der Führungen angebrachten, ersten Winde bestehen und der Wagen eine zweite Winde zum nach Bedarf Senken oder Heben des Greiferelements umfasst.

8. Vorrichtung (1) nach einem der obigen Ansprüche, **dadurch gekennzeichnet, dass** die Bodenfläche zwischen den Wänden an zumindest einem von der Auslassöffnung begrenzten Teil (17) davon eine in der Richtung von der Einlassöffnung zur Auslassöffnung schräge Steigung hat.

9. Vorrichtung (1) nach Anspruch 8, **dadurch gekennzeichnet, dass** die Steigung mit Hilfe von Einstellungsmitteln einstellbar ist.

10. Vorrichtung (1) nach einem der obigen Ansprüche, **dadurch gekennzeichnet, dass** das Greiferelement (10) einen Schieber (20) umfasst, der in einem bestimmten Winkel zu dem zumindest einen Greiferarm (8) angebracht ist.

11. Vorrichtung (1) nach Anspruch 10, **dadurch gekennzeichnet, dass** der bestimmte Winkel mit Hilfe von Einstellungsmitteln einstellbar ist.

12. Vorrichtung (1) nach Anspruch 10 oder 11, **dadurch gekennzeichnet, dass** der Schieber eine Reihe zur Bodenfläche gerichtete, zahnförmige Vorsprünge umfasst.

## Revendications

1. Dispositif de dosage (1) pour la décharge dosée d'un masse de matière en vrac (2), par exemple du terreau, à partir d'un réservoir de stockage qui comprend au moins deux parois opposées parallèles (3, 4), et dans lequel une ouverture de chargement et une ouverture de déchargement sont respectivement prévues entre les extrémités extérieures correspondantes (5, 6) de ces parois pour recevoir cette masse (2) entre ces parois et les ouvertures de chargement et de déchargement, dans lequel un chariot (7) peut coulisser le long du bord supérieur desdites parois (3, 4), **caractérisé en ce que**, sur le chariot, au moins un bras de saisie (8) est suspendu d'une façon pivotante à une extrémité autour d'un arbre de pivot (9) qui s'étend transversalement aux parois (3, 4), ledit bras de saisie (8) étant pourvu à l'autre extrémité d'un élément de saisie (10), dans lequel l'élément de saisie (10) peut être déplacé de façon contrôlée ou libre, comme on le souhaite, dans la direction verticale, et le chariot (7) peut être déplacé sur une telle distance et le bras de saisie (8) présente une telle longueur que l'élément de saisie (10) puisse être déplacé sur toute la longueur de l'espace défini par les parois (3, 4).

2. Dispositif (1) selon la revendication 1, **caractérisé en ce que** le au moins un bras de saisie (8) présente une longueur fixe qui est plus grande dans n'importe quelle position du chariot (7) que la distance entre l'arbre de pivot (9) et la surface inférieure (11) entre les parois (3, 4).

3. Dispositif selon la revendication 1, **caractérisé en ce que** le au moins un bras de saisie est télescopique, dans lequel la longueur maximum du bras de saisie est au moins égale à la distance maximum entre l'arbre de pivot et la surface inférieure entre les parois.

4. Dispositif selon l'une quelconque des revendications 1 à 3, **caractérisé en ce que** le chariot (7) peut être déplacé en utilisant des moyens d'entraînement (12) sur des guides parallèles (13, 14) qui s'étendent horizontalement le long des parois (3, 4).

5. Dispositif (1) selon la revendication 4, **caractérisé en ce qu'**un moteur électrique (12) est placé sur le chariot (7) afin de déplacer le chariot (7) et d'abaisser ou de lever l'élément de saisie (10) comme on le désire.

6. Dispositif selon la revendication 1 ou 2, **caractérisé en ce que** le chariot peut être déplacé sous l'influence de la force de gravité dans la direction allant de l'ouverture de déchargement à l'ouverture de chargement sur des guides parallèles qui s'inclinent vers le haut le long des parois dans la direction allant de l'ouverture de chargement à l'ouverture de déchargement, et des moyens d'entraînement sont prévus afin de déplacer le chariot dans la direction allant de l'ouverture de chargement à l'ouverture de déchargement.

7. Dispositif selon la revendication 6, **caractérisé en ce que** les moyens d'entraînement du chariot sont formés par un premier treuil placé au point le plus haut des guides, et le chariot comprend un deuxième treuil destiné à abaisser ou à lever l'élément de saisie comme on le désire.

8. Dispositif (1) selon l'une quelconque des revendications qui précèdent, **caractérisé en ce que** la surface inférieure entre les parois présente, sur au moins une partie (17) de celle-ci limitée par l'ouverture de déchargement, une pente orientée vers le haut dans la direction allant de l'ouverture de chargement à l'ouverture de déchargement.

9. Dispositif (1) selon la revendication 8, **caractérisé en ce que** l'inclinaison peut être réglée à l'aide de moyens de réglage.

10. Dispositif (1) selon l'une quelconque des revendications qui précèdent, **caractérisé en ce que** l'élément de saisie (10) comprend un racloir (20) qui est placé à un angle déterminé par rapport au au moins un bras de saisie (8).

11. Dispositif (1) selon la revendication 10, **caractérisé en ce que** l'angle déterminé peut être réglé à l'aide de moyens de réglage.

12. Dispositif (1) selon la revendication 10 ou 11, **caractérisé en ce que** le racloir comprend une rangée de saillies en forme de dents orientées en direction de la surface inférieure.
